# EUROPEAN PATENT APPLICATION

(11) **EP 4 625 543 A1**
(43) Date of publication of application: **01.10.2025**
(21) Application number: 23915002.2
(22) Date of filing: 27.12.2023
(51) Int. Cl.: H01M 4/525, H01M 4/505, H01M 4/131, H01M 10/0525, H01M 4/02

(54) **CATHODE ACTIVE MATERIAL, CATHODE COMPRISING SAME, AND LITHIUM SECONDARY BATTERY**

(30) Priority: 02.01.2023 KR 20230000406
(71) Applicant: LG CHEM, LTD., Seoul 07336 (KR)
(72) Inventor: GU, Ye Hyeon, Daejeon 34122 (KR); JEONG, Jin Hoo, Daejeon 34122 (KR); RYU, Hyeon Mo, Daejeon 34122 (KR); HEO, Kook Jin, Daejeon 34122 (KR); HWANG, Joo Kyoung, Daejeon 34122 (KR); LEE, Ji Young, Daejeon 34122 (KR); KIM, Kyung Gu, Daejeon 34122 (KR)
(74) Representative: Hoffmann Eitle
(86) International application number: PCT/KR2023/021711
(87) International publication number: WO 2024/147542

(57) **Abstract**

The present invention relates to a positive electrode active material, the positive electrode active material including a lithium composite transition metal oxide which is in the form of a single particle and includes two or more selected from nickel, cobalt, and manganese, wherein when a triangle is drawn by connecting a peak point having a maximum y value and a full width at half maximum (FWHM) in a particle size distribution curve of a log scale in which an x-axis is a particle diameter (unit: µm) of the lithium composite transition metal oxide and a y-axis is a volume percentage (unit: %), a right inner angle of the triangle is larger than a left inner angle thereof, and the y value of the peak point is 10 to 15.

## Description

### TECHNICAL FIELD

### Cross-reference to Related Applications

The present application claims the benefit of the priority of Korean Patent Application No. 10-2023-0000406, filed on January 02, 2023, the disclosure of which is incorporated herein in its entirety by reference.

### Technical Field

The present invention relates to a positive electrode active material, a positive electrode including the same, and a lithium secondary battery.

### BACKGROUND ART

Recently, as technology in electric vehicles, etc. has been developed, demand for high-capacity battery has been increasing, and accordingly, research on a high-Ni-based positive electrode active material having excellent capacity characteristics has been actively carried out.

Conventionally, many studies have been conducted to prepare a positive electrode active material in the form of a secondary particle in which spherical primary particles are aggregated as a high nickel-based positive electrode active material, and in this case, studies have been directed to uniformly prepare the particle diameter of the positive electrode active material (that is, a small deviation in particle diameter). However, when the particle diameter of the positive electrode active material is uniform, the density of the positive electrode active material present in the positive electrode active material layer is low after pressure is applied to manufacture the positive electrode in the process of manufacturing a positive electrode, and thus it is difficult to achieve a high energy density.

Accordingly, there is a need to develop a positive electrode active material capable of achieving a high rolling density.

### [PRIOR ART DOCUMENT]

### [PATENT DOCUMENT]

(Patent Document 1) KR 2021-0070893 A

### DISCLOSURE OF THE INVENTION

### TECHNICAL PROBLEM

To solve the above limitations, an aspect of the present invention provides a positive electrode active material which is in the form of a single particle and is adjusted to have a specific particle size distribution shape to achieve a high rolling density.

In addition, another aspect of the present invention provides a positive electrode and a lithium secondary battery having a small porosity of the positive electrode active material layer by including the positive electrode active material.

### TECHNICAL SOLUTION

In order to solve the above problems, according to an aspect of the present invention, there is provided a positive electrode active material, a positive electrode including the same, and a lithium secondary battery.
(1) According to an aspect of the present invention, there is provided a positive electrode active material including a lithium composite transition metal oxide which is in the form of a single particle and includes two or more selected from nickel, cobalt, and manganese, wherein when a triangle is drawn by connecting a peak point having a maximum y value and a full width at half maximum (FWHM) in a particle size distribution curve of a log scale in which an x-axis is a particle diameter (unit: µm) of the lithium composite transition metal oxide and a y-axis is a volume percentage (unit: %), a right inner angle of the triangle is larger than a left inner angle thereof, and the y value of the peak point is 10 to 15.
(2) In (1) above of the present invention, there is provided the positive electrode active material, wherein the lithium composite transition metal oxide is a single particle or a secondary particle in which at most 10 primary particles are aggregated.
(3) In (1) or (2) above of the present invention, there is provided the positive electrode active material, wherein the lithium composite transition metal oxide contains at least 60 mol% of nickel among all metals other than lithium.
(4) In any one of (1) to (3) above of the present invention, there is provided the positive electrode active material, wherein the lithium composite transition metal oxide has a composition represented by Formula 1 below:

   [Formula 1] LiₓNiₐCo_{b}Mn_{c}M¹_{d}O₂

   In Formula 1 above,
   M¹ is at least one selected from among Al, Zr, B, W, Mo, Cr, Nb, Mg, Hf, Ta, La, Ti, Sr, Ba, Ce, P, Y, Na, and Ca, and
   0.9≤x≤1.3, 0.6≤a<1.0, 0<b<0.4, 0<c<0.4, 0≤d≤0.2, and a+b+c+d=1.
(5) In any one of (1) to (4) above of the present invention, there is provided the positive electrode active material, wherein the lithium composite transition metal oxide has a D₅₀ of 3 µm to 10 µm.
(6) In any one of (1) to (5) above of the present invention, there is provided the positive electrode active material, wherein the lithium composite transition metal oxide has a Dₘᵢₙ of 0.5 µm to 4 µm.
(7) In any one of (1) to (6) above of the present invention, there is provided the positive electrode active material, wherein the lithium composite transition metal oxide has a Dₘₐₓ of 11 µm to 31 µm.
(8) In any one of (1) to (7) above of the present invention, there is provided the positive electrode active material having a rolling density of at least 3.57 g/cm³.
(9) In any one of (1) to (8) above of the present invention, there is provided the positive electrode active material having a tap density of 2.45 g/cm³ to 2.80 g/cm³.
(10) According to another aspect of the present invention, there is provided a positive electrode including: a current collector; and a positive electrode active material layer which is formed on the current collector and includes the positive electrode active material according to any one of (1) to (9) above.
(11) According to still another aspect of the present invention, there is provided a lithium secondary battery including: the positive electrode according to (10) above; a negative electrode; a separator interposed between the positive electrode and the negative electrode; and an electrolyte.

### ADVANTAGEOUS EFFECTS

The positive electrode active material of the present invention is in the form of a single particle, and when a triangle is drawn by connecting a peak point having a maximum y value and a full width at half maximum (FWHM) in a particle size distribution curve of a log scale in which an x axis is a particle diameter (unit: µm) of the lithium composite transition metal oxide and a y axis is a volume percentage (unit: %), a right inner angle of the triangle is larger than a left inner angle thereof, as well as the y value of the peak point satisfies 10 to 15. When a positive electrode is prepared using the positive electrode active material, the porosity of the positive electrode active material layer is reduced when the same pressure is applied, and thus the contact area between the positive electrode active material and the conductive agent is increased, and as a result, the charging capacity of the lithium secondary battery can be increased and the lifetime characteristics can be improved.

### BRIEF DESCRIPTION OF THE DRAWINGS

FIG. 1 is a particle size distribution graph of each of the positive electrode active materials prepared in Examples and Comparative Examples.
FIG. 2 is a SEM image of the positive electrode active material prepared in Example 1.
FIG. 3 is a SEM image of the positive electrode active material prepared in Example 2.
FIG. 4 is a SEM image of the positive electrode active material prepared in Comparative Example 1.
FIG. 5 is a SEM image of the positive electrode active material prepared in Comparative Example 2.
FIG. 6 is a SEM image of the positive electrode active material prepared in Comparative Example 3.

### BEST MODE FOR CARRYING OUT THE INVENTION

Hereinafter, the present invention will be described in more detail to allow for a clearer understanding of the present invention.

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

As used herein, the term "primary particle" refers to a minimum particle unit distinguished as a single lump when the cross-section of the positive electrode active material is observed through a scanning electron microscope (SEM), and may be composed of a plurality of crystalline grains.

As used herein, the term "secondary particle" refers to a secondary structure formed by the aggregation of more than 10 primary particles. A particle diameter of the secondary particle may be measured through a particle size analyzer.

As used herein, the terms "D₁₀," "D_{50,}" and "D₉₀" mean particle diameters at 10% point (D₁₀), 50% point (D₅₀), and 90% point (D₉₀) of the volume cumulative distribution according to particle diameters, respectively. The D₁₀, D₅₀, and D₉₀ may be measured by dispersing powder to be measured in a dispersion medium, introducing the powder into a commercially available laser diffraction particle size measuring apparatus (for example, S3500 made by Microtrac, Inc.), measuring a difference in diffraction pattern depending on a particle size when the particles pass through a laser beam to calculate a volume cumulative distribution depending on a particle diameter, and calculating a particle diameter at points of 10%, 50%, and 90% of a volume cumulative distribution depending on the particle diameter in the measuring apparatus.

As used herein, the term "form of a single particle" means including both a single particle of the positive electrode active material and/or the lithium composite transition metal oxide and a form in which two to ten particles are aggregated. That is, the positive electrode active material in the form of a single particle and/or the lithium composite transition metal oxide in the form of a single particle of the present invention may include one or more selected from the group consisting of a single particle and particles in which two to ten particles of the positive electrode active material and/or the lithium composite transition metal oxide are aggregated.

In the present invention, the particle size distribution curve of the log scale in which an x-axis is a particle diameter (µm) of the lithium composite transition metal oxide and a y-axis is the volume percentage (%) is plotted by measuring under the following measurement conditions using a laser diffraction particle size measuring apparatus (S3500 Extended) made by Microtrac, Inc.
- Cycle speed: 20%/sec
- Refractive index ratio: 1.55
- Equipment input solvent: distilled water
- Calculation logic: X100
- Sample amount: 0.0025 g
- Sample input dispersant: 10% Sodium Hexamethaphosphate 1 mL
- Sample ultrasonic dispersion: 40 KHz, 1 min.

### Positive Electrode Active Material

The present invention provides a positive electrode active material.

The positive electrode active material according to the present invention includes a lithium composite transition metal oxide which is in the form of a single particle and includes two or more selected from nickel, cobalt, and manganese, and when a triangle is drawn by connecting a peak point having a maximum y value and a full width at half maximum (FWHM) in a particle size distribution curve of a log scale in which an x-axis is a particle diameter (unit: µm) of the lithium composite transition metal oxide and a y-axis is a volume percentage (unit: %), a right inner angle of the triangle is larger than a left inner angle thereof, and the y value of the peak point is 10 to 15.

First, when the right inner angle of the triangle is larger than the left inner angle thereof and the y value of the peak point is 10 to 15 (that is, the maximum value of the volume percentage is 10 vol% to 15 vol%), since particles having a small particle diameter (fine powder) are appropriately present and have a wide particle size distribution, an electrode having a high rolling density and thus a high energy density may be implemented.

Specifically, the y value of the peak point may be from 10.00, 10.30, or 10.60 to 13.00, 14.00, 14.50, or 15.00.

Meanwhile, when the right inner angle of the triangle is smaller than the left inner angle thereof, a particle size distribution is biased to the left and a region in which particles having a large particle diameter (large powder) are present is excessively increased, and thus, the electrode cannot have a high rolling density. In addition, when the y value of the peak point is less than 10, the particles have a particle size distribution in which a fine powder region and a large powder region other than the central particle diameter increase at the same time, and thus do not have a high rolling density, and when the y value is greater than 15, the particles have a very narrow particle diameter distribution, and thus may not have a high rolling density because a fine powder region is not present. Meanwhile, the positive electrode active material having a y value of the peak point greater than 15 is difficult to be prepared by a method known to date.

According to the present invention, the positive electrode active material may include the lithium composite transition metal oxide in the form of a single particle. As a specific example, the lithium composite transition metal oxide in the form of a single particle is a single particle or a secondary particle in which at most 10 primary particles are aggregated. The conventional positive electrode active material in the form of a secondary particle in which more than 10 primary particles are aggregated has no choice but to increase porosity in order to minimize cracks generated by pressure during rolling for manufacturing an electrode, which in turn causes the deterioration in an energy density of the lithium secondary battery. However, when the positive electrode active material has the form of a single particle or a secondary particle in which at most 10 primary particles are aggregated, like the positive electrode active material of the present invention, cracks due to a change in volume in a unit lattice may be minimized when charging and discharging the lithium secondary battery, and particularly, cracks generated by pressure during rolling for manufacturing an electrode may be minimized. Therefore, when the positive electrode active material of the present invention is used, it is possible to perform rolling with a lower porosity when rolling for manufacturing an electrode, thereby improving the energy density of the lithium secondary battery.

According to the present invention, the lithium composite transition metal oxide may include nickel in an amount of at least 60 mol%, at least 70 mol%, at least 80 mol%, or at least 85 mol% among all metals other than lithium in terms of capacity improvement. That is, the lithium composite transition metal oxide may contain nickel, and may be a high-Ni-based lithium composite transition metal oxide in which the content of nickel (Ni) with respect to the total transition metal is at least 60 mol%, at least 70 mol%, at least 80 mol%, or at least 85 mol%. In this case, it may be possible to secure a high energy density from a high nickel content.

According to the present invention, the lithium composite transition metal oxide may have a composition represented by Formula 1 below:

[Formula 1] LiₓNiₐCo_{b}Mn_{c}M¹_{d}O₂

In Formula 1 above,
M¹ is at least one selected from among Al, Zr, B, W, Mo, Cr, Nb, Mg, Hf, Ta, La, Ti, Sr, Ba, Ce, P, Y, Na, and Ca, and
0.9≤x≤1.3, 0.6≤a<1.0, 0<b<0.4, 0<c<0.4, 0≤d≤0.2, and a+b+c+d=1.

In Formula 1 above, M¹ may be a doping element that may be included in the lithium composite transition metal oxide, and may be appropriately selected as necessary.

In Formula 1 above, x is a molar ratio of lithium to a transition metal in a lithium composite transition metal oxide, and may be 0.9 or more, 0.95 or more, or 1.0 or more, and may also be 1.1 or less, 1.07 or less, 1.05 or less, or 1.03 or less.

In Formula 1 above, a, b, c, and d may be mole fractions of nickel (Ni), cobalt (Co), manganese (Mn), and a doping element (M¹) among transition metals, respectively. As a specific example, a above represents a mole fraction of nickel (Ni) in the transition metals, may be 0.6 or more, 0.7 or more, 0.8 or more, 0.85 or more, 0.88 or more, 0.90 or more, 0.91 or more, 0.92 or more, 0.93 or more, 0.94 or more, 0.95 or more, or 0.96 or more, and may also be less than 1.0, 0.99 or less, 0.98 or less, 0.97 or less, or 0.96 or less. In addition, b above represents a mole fraction of cobalt (Co) in the transition metals, may be greater than 0, 0.01 or more, 0.02 or more, or 0.03 or more, and may be less than 0.4, 0.3 or less, 0.2 or less, 0.1 or less, 0.09 or less, 0.08 or less, 0.07 or less, 0.06 or less, or 0.05 or less. c above represents a mole fraction of manganese (Mn) in the transition metals, may be greater than 0, 0.01 or more, or 0.05 or more, and may be less than 0.4, 0.3 or less, 0.2 or less, 0.1 or less, 0.09 or less, 0.08 or less, 0.07 or less, 0.06 or less, or 0.05 or less. d above is a molar fraction of the doping element (M¹) in the transition metals, may be 0, 0.01 or more, 0.02 or more, 0.03 or more, 0.04 or more, 0.05 or more, 0.06 or more, 0.07 or more, 0.08 or more, 0.09 or more, 0.10 or more, 0.11 or more, 0.12 or more, 0.13 or more, 0.14 or more, 0.15 or more, 0.16 or more, 0.17 or more, 0.18 or more, or 0.19 or more, and may be less than 0.20, 0.19 or less, 0.18 or less, 0.17 or less, 0.16 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, 0.04 or less, 0.03 or less, 0.02 or less, or 0.01 or less.

According to the present invention, the lithium composite transition metal oxide may have a D₅₀ of 3 µm to 10 µm. Specifically, the lithium composite transition metal oxide may have a D₅₀ from 3.00 µm, 3.30 µm, 3.60 µm, 3.90 µm, or 5.00 µm to 7.00 µm, 8.00 µm, 9.00 µm, or 10.0 µm. In this case, since the positive electrode active material may have a high rolling density, the electrode porosity may be reduced.

According to the present invention, the lithium composite transition metal oxide may have a Dₘᵢₙ of 0.5 µm to 4 µm. Specifically, the lithium composite transition metal oxide may have a Dₘᵢₙ from 0.500 µm, 1.000 µm, or 1.500 µm to 3.000 µm, 3.500 µm, or 4.000 µm. In this case, there are some particles having a small particle diameter, thereby increasing the volume filling rate and achieving a high rolling density.

According to the present invention, the lithium composite transition metal oxide may have a Dₘₐₓ of 11 µm to 31 µm.Specifically, the lithium composite transition metal oxide may have a Dₘₐₓ from 11.00 µm, 12.00 µm, 13.00 µm, 14.00 µm, or 15.00 µm to 17.00 µm, 21.00 µm, 25.00 µm, or 31.00 µm. In this case, a high rolling density may be obtained since there is no too large powder.

According to the present invention, the positive electrode active material may have a rolling density of at least 3.57 g/cm³. Specifically, the rolling density of the positive electrode active material may be from 3.57 g/cm³, 3.575 g/cm³, or 3.58 g/cm³ to 3.73 g/cm³, 3.74 g/cm³, or 3.75 g/cm³. In this case, even when the same force is applied during the electrode rolling process, the electrode porosity is low, and thus the energy density may be increased, and the linear pressure applied to the electrode to exhibit the same porosity during rolling with a roll press in the process of manufacturing an electrode is lowered, thereby improving processability.

The rolling density is a rolling density calculated by Equation 2 below when a pellet is formed by applying a force until the force corresponds to 9,000 kgf using an automatic pellet press.

Specifically, the rolling density is a value obtained according to the following (1) to (3):
(1) adjusting a reference point for thickness using a cylindrical mold for a circular pellet holder using an auto pellet press (Carver, Inc., 3887.4);
(2) measuring the thickness of the pellet formed by putting the positive electrode active material in the circular pellet holder and applying force until a force corresponds to 9,000 kgf; and
(3) Calculating a pellet volume using Equation 1 below, and calculating a rolling density using Equation 2 below. Pellet volume (cm3) = π(radius of circular pellet holder)2 × thickness of pellet Rolling density (g/cm3) = weight (g) of positive electrode active material / pellet volume (cm3)

According to the present invention, the positive electrode active material may have a tap density of 2.45 g/cm³ to 2.80 g/cm³. Specifically, the positive electrode active material may have a tap density from 2.45g/cm³ or 2.50g/cm³ to 2.70g/cm³, 2.75g/cm³, or 2.80g/cm³. In this case, even when the same force is applied during the electrode rolling process, the electrode porosity is low, and thus the energy density may be increased, and the linear pressure applied to the electrode to exhibit the same porosity during rolling with a roll press in the process of manufacturing an electrode is lowered, thereby improving processability.

The tap density is an index indicating how much the positive electrode active materials can be packed in one volume by performing only tapping without applying a separate pressure, and is a value calculated according to Equation 3 below after measuring the volume obtained by putting the positive electrode active material into the cylinder using a tap density meter (made by J.Engelsmann AG, Jolting Volumeter Type STAV II) and then tapping 1,800 times. Tap density (g/cm3) = weight (g)/volume (cm3) of positive electrode active material

### Positive Electrode

The present invention provides a positive electrode including the above positive electrode active material.

According to the present invention, the positive electrode includes: a positive electrode current collector; and a positive electrode active material layer formed on the positive electrode current collector, and the positive electrode active material layer includes the positive electrode active material according to the present invention.

According to the present invention, the positive electrode active material layer may have a porosity of 16 vol% to 24 vol% in order to prevent overload on the roll and not to affect the thickness of the current collector when rolling with a roll press in the process of manufacturing an electrode. Specifically, the porosity of the positive electrode active material layer according to the present invention may be from 16 vol%, 17 vol%, or 18 vol% to 20 vol%, 21 vol%, 22 vol%, or 24 vol%. In this case, since the positive electrode has a high electrode density, the thickness of the electrode may be reduced and the energy density per volume may be increased.

The positive electrode current collector may include a metal having high conductivity, and is not particularly limited as long as the positive electrode active material layer easily adheres thereto and there is no reactivity in the voltage range of the battery. For example, stainless steel, aluminum, nickel, titanium, fired carbon, or aluminum or stainless steel that is surface-treated with one of carbon, nickel, titanium, silver, or the like may be used as the positive electrode current collector. Also, the positive electrode current collector may typically have a thickness of 3 µm to 500 µm, and microscopic irregularities may be formed on the surface of the current collector to improve the adhesion of the positive electrode active material. The positive electrode current collector, for example, may be used in various shapes such as a film, a sheet, a foil, a net, a porous body, a foam body, and a non-woven fabric body.

The positive electrode active material layer may optionally include a conductive agent and a binder together with the positive electrode active material as necessary. In this case, the positive electrode active material may be included in a content of 80-99 wt%, more specifically 85-98.5 wt%, with respect to the total weight of the positive electrode active material layer, and may exhibit excellent capacity characteristics within this range.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metals such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% with respect to the total weight of the positive electrode active material layer.

The binder serves to improve binding between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with Li, Na, or Ca, or various copolymers thereof, and any one thereof or a mixture of two or more thereof may be used. The binder may be included in an amount of 0.1 wt% to 15 wt% with respect to the total weight of the positive electrode active material layer.

The positive electrode may be prepared according to a typical method for preparing a positive electrode except that the above-described positive electrode active material is used. Specifically, the positive electrode may be prepared by coating a positive electrode current collector with a composition for forming a positive electrode active material layer, the composition being prepared by dissolving or dispersing the above-described positive electrode active material, and optionally the binder and the conductive agent as well as a dispersant, as necessary, in a solvent, and then drying and rolling the coated positive electrode current collector, or may be prepared by casting the composition for forming a positive electrode active material layer on a separate support and then laminating a film separated from the support on the positive electrode current collector.

The solvent may be a solvent normally used in the art. The solvent may include dimethyl sulfoxide (DMSO), isopropyl alcohol, N-methylpyrrolidone (NMP), dimethylformamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersing agent in consideration of a coating thickness of the slurry and manufacturing yield, and may allow to have a viscosity that may provide excellent thickness uniformity during the subsequent coating for the preparation of the positive electrode.

### Lithium Secondary Battery

The present invention provides a lithium secondary battery including the positive electrode.

According to the present invention, the lithium secondary battery includes: the positive electrode; a negative electrode; a separator interposed between the positive electrode and the negative electrode; and an electrolyte. The lithium secondary battery may further optionally include a battery container that accommodates an electrode assembly of the positive electrode, the negative electrode, and the separator, and a sealing member which seals the battery container.

The negative electrode may include a negative electrode current collector and a negative electrode active material layer disposed on the negative electrode current collector.

The negative electrode current collector is not particularly limited as long as it has high conductivity without causing adverse chemical changes in the battery, and, for example, copper, stainless steel, aluminum, nickel, titanium, sintered carbon, copper or stainless steel that is surface-treated with one of carbon, nickel, titanium, silver, or the like, and an aluminum-cadmium alloy or the like may be used. Also, the negative electrode current collector may typically have a thickness of 3 µm to 500 µm, and, similar to the positive electrode current collector, microscopic irregularities may be formed on the surface of the current collector to improve the binding force of the negative electrode active material. For example, the negative electrode current collector may be used in various shapes such as a film, a sheet, a foil, a net, a porous body, a foam body, and a non-woven fabric body.

The negative electrode active material layer includes optionally a binder and a conductive agent together with the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may include soft carbon and hard carbon, and typical examples of the high crystalline carbon may include irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes. The negative electrode active material may be included in an amount of 80 wt% to 99 wt% based on the total weight of the negative electrode active material layer.

The binder of the negative electrode active material layer is a component that assists in the binding between the conductive agent, the active material, and the current collector, wherein the binder is commonly added in an amount of 0.1 wt% to 10 wt% based on the total weight of the negative electrode active material layer. Examples of the binder may include a polyvinylidene fluoride (PVDF), a polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, a nitrile-butadiene rubber, a fluoro rubber, various copolymers thereof, and the like.

According to an embodiment of the present invention, the conductive agent of the negative electrode active material layer is a component for further improving the conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a negative electrode current collector with a composition for forming a negative electrode active material layer, the composition being prepared by dissolving or dispersing the negative electrode active material, and optionally the binder and the conductive agent as well as the negative electrode active material in a solvent, and drying the coated negative electrode current collector, or may be prepared by casting the composition for forming a negative electrode active material layer on a separate support and then laminating a film separated from the support on the negative electrode current collector.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte solution as well as low resistance to the transfer of electrolyte ions is preferred. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but is not limited thereto. Specifically, the electrolyte may include an organic solvent and a lithium salt.

Any organic solvent may be used without particular limitation as long as it may serve as a medium through which ions involved in an electrochemical reaction of a battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (*e.g.,* ethylmethyl carbonate, dimethyl carbonate, or diethyl carbonate) is more preferable.

The lithium salt may be used without particular limitation as long as it is a compound capable of providing lithium ions used in the lithium secondary battery. Specifically, anions of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and as the lithium salt, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. It is preferable to use the lithium salt in a concentration range of 0.1 M to 2.0 M. When the concentration of the lithium salt is included within the above range, the electrolyte may have suitable conductivity and viscosity, thereby exhibiting excellent performance, and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% with respect to the total weight of the electrolyte.

The lithium secondary battery including the positive electrode active material according to the present invention stably exhibits excellent capacity characteristics and lifetime characteristics, and is thus useful for portable devices such as mobile phones, notebook computers, and digital cameras, and in the field of electric vehicles such as hybrid electric vehicles (HEVs), and electric vehicle (EVs).

A shape of the lithium secondary battery is not particularly limited, but a cylindrical type using a can, a prismatic type, a pouch type, or a coin type may be used.

The lithium secondary battery may not only be used in a battery cell that is used as a power source of a small device, but may also be used as a unit cell in a medium and large sized battery module including a plurality of battery cells.

Accordingly, the present invention may provide a battery module including the lithium secondary battery as a unit cell, and a battery pack including the battery module.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

### MODE FOR CARRYING OUT THE INVENTION

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Example

### Example 1

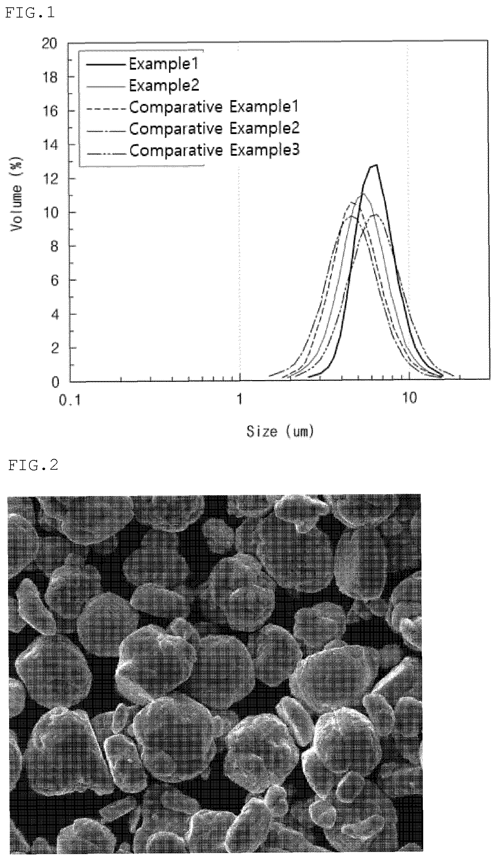

A lithium composite transition metal oxide (positive electrode active material) having a composition represented by LiNi_{0.96}Co_{0.03}Mn_{0.01}O₂ was prepared in the form of a single particle by mixing a composite transition metal hydroxide (D₅₀: 7 µm) having a composition represented by Ni_{0.96}Co_{0.03}Mn_{0.01}(OH)₂ and LiOH such that a molar ratio of Li/metals (Ni+Co+Mn) became 1.02, performing primary firing at 830 °C for 12 hours in an oxygen atmosphere, pulverizing the fired mixture to have a particle size distribution profile as shown in FIG. 1 using a jet mill, and performing secondary firing at 770 °C for 12 hours in an oxygen atmosphere.

### Example 2

A lithium composite transition metal oxide (positive electrode active material) having a composition represented by LiNi_{0.89}Co_{0.03}MN_{0.08}O₂ was prepared in the form of a single particle by mixing a composite transition metal hydroxide (D₅₀: 4.2 µm) having a composition represented by Ni_{0.89}Co_{0.03}Mn_{0.08}(OH)₂ and LiOH such that a molar ratio of Li/metals (Ni+Co+Mn) became 1.05, performing primary firing at 880 °C for 12 hours in an oxygen atmosphere, pulverizing the fired mixture to have a particle size distribution profile as shown in FIG. 1 using a jet mill, and performing secondary firing at 800 °C for 12 hours in an oxygen atmosphere.

### Comparative Example 1

A lithium composite transition metal oxide (positive electrode active material) having a composition represented by LiNi_{0.96}Co_{0.03}Mn_{0.01}O₂ was prepared in the same manner as in Example 1, except that a composite transition metal hydroxide (D₅₀: 4 µm) having a composition represented by Ni_{0.96}Co_{0.03}Mn_{0.01}(OH)₂ was used instead of the composite transition metal hydroxide (D₅₀: 7 µm) having a composition represented by Ni_{0.96}Co_{0.03}Mn_{0.01}(OH)₂ in Example 1.

### Comparative Example 2

A lithium composite transition metal oxide (positive electrode active material) having a composition represented by LiNi_{0.89}Co_{0.03}MN_{0.05}O₂ was prepared in the same manner as in Example 2, except that the primary firing was performed in an oxygen atmosphere at 850 °C for 12 hours in Example 2.

### Comparative Example 3

A lithium composite transition metal oxide (positive electrode active material) having a composition represented by LiNi_{0.96}Co_{0.03}Mn_{0.01}O₂ was prepared in the same manner as in Example 1, except that a composite transition metal hydroxide (D₅₀: 5.2 µm) having a composition represented by Ni_{0.96}Co_{0.03}Mn_{0.01}(OH)₂ was used instead of the composite transition metal hydroxide (D₅₀: 7 µm) having a composition represented by Ni_{0.96}Co_{0.03}Mn_{0.01}(OH)₂ in Example 1.

### Experimental Examples

### Experimental Example 1: SEM Image Taking

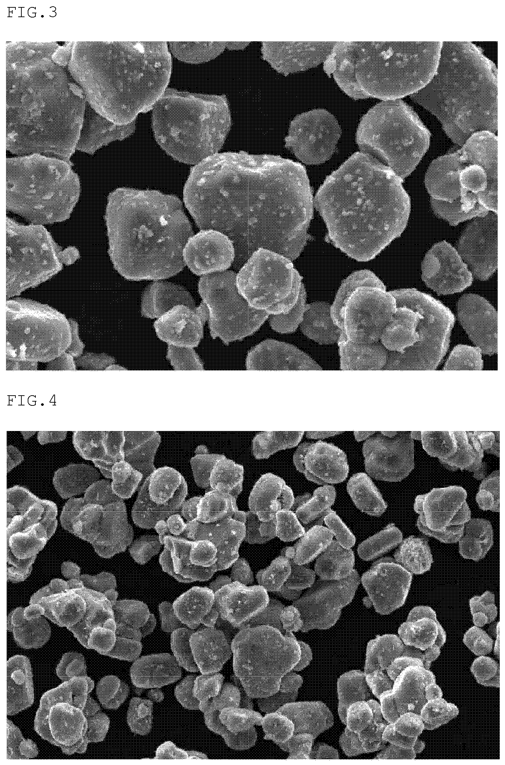

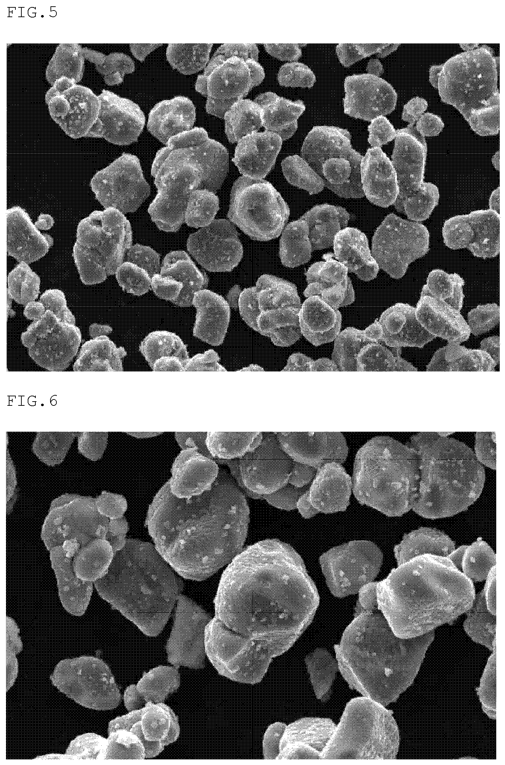

Each of the positive electrode active materials prepared in Examples 1 to 2 and Comparative Examples 1 to 3 was photographed using a scanning electron microscope (SEM, Inspect F made by FEI), respectively, and these are shown in FIGS. 2 to 6, respectively.

### Experimental Example 2: Particle Diameter and Particle Size Distribution Curve Analysis

For the positive electrode active materials prepared in Examples 1 to 2 and Comparative Examples 1 to 3, Dₘᵢₙ, D₅₀, and Dₘₐₓ values were measured using a particle size analyser (PSD, S3500 made by Microtrac), and the results are shown in Table 1 below, and a particle size distribution curve of log scale in which the x-axis is a particle diameter (unit: µm) of the lithium composite transition metal oxide and the y-axis is a volume percentage (unit: %) is shown in FIG. 1. In addition, when a triangle is drawn by connecting the peak point having a maximum y value and a full width at half maximum (FWHM), the respective sizes of the left inner angle (θ_{L}) and the right inner angle (θ_{R}) of the triangle, a difference (θ_{R} - θ_{L}) and the y values of the peak point are shown together in Table 1 below.

**[Table 1]**

| Division | Dₘᵢₙ (µm) | D₅₀ (µm) | Dₘₐₓ (µm) | θ_{L} (°) | θ_{R} (°) | θ_{R} - θ_{L} (°) | y value of peak point |
|---|---|---|---|---|---|---|---|
| Example 1 | 2.522 | 6.01 | 15.56 | 88.582 | 88.981 | 0.399 | 12.55 |
| Example 2 | 1.783 | 5.15 | 15.56 | 88.293 | 88.480 | 0.187 | 10.85 |
| Comparative Example 1 | 1.783 | 4.64 | 15.56 | 88.402 | 88.009 | -0.393 | 10.3 |
| Comparative Example 2 | 1.499 | 4.43 | 15.56 | 87.889 | 87.886 | -0.003 | 9.55 |
| Comparative Example 3 | 2.121 | 6.00 | 18.50 | 87.669 | 88.122 | 0.453 | 9.52 |

As shown in Table 1, it may be confirmed that the positive electrode active materials prepared in Examples 1 to 2 have a right inner angle greater than a left inner angle, and the y value of the peak point is 10 to 15.

### Experimental Example 3: Evaluation of Rolling Density and Tap Density

### - Rolling Density

A reference point for the thickness was adjusted using a cylindrical mold for a circular pellet holder having a diameter of 13 mm using an auto pellet press (Carver, Inc., 3887.4). Then, 3 g of the positive electrode active material prepared in each of Examples 1 to 2 and Comparative Examples 1 to 3 was taken into the circular pellet holder, and the thickness of the formed pellet was measured by applying a force until the force corresponded to 9,000 kgf. Subsequently, the pellet volume was calculated using Equation 1 below, and the rolling density was calculated using Equation 2 below, and the results are shown in Table 2 below. Pellet volume (cm3) = π(radius of circular pellet holder)2 × thickness of pellet Rolling density (g/cm3) = weight (g) of positive electrode active material / pellet volume (cm3)

### - Tap density

There was measured a volume obtained by adding 50 g of the positive electrode active material prepared in each of Examples 1 to 2 and Comparative Examples 1 to 3 into a 100-mL cylinder using a tap density meter (Jolting Volumeter Type STAV II made by J.Engelsmann AG Co.), and tapping 1800 times. The tap density was calculated by Equation 3 below, and the results are shown in Table 2 below. Tap density (g/cm3) = weight (g)/volume (cm3) of positive electrode active material

**[Table 2]**

| Division | Rolling Density (g/cm³) | Tap Density (g/cm³) |
|---|---|---|
| Example 1 | 3.58 | 2.50 |
| Example 2 | 3.61 | 2.54 |
| Comparative Example 1 | 3.53 | 2.31 |
| Comparative Example 2 | 3.54 | 2.29 |
| Comparative Example 3 | 3.56 | 2.43 |

As shown in Table 2 above, it may be confirmed that the positive electrode active materials prepared in Examples 1 to 2 have a rolling density of 3.57 g/cm³ or more according to Equation 2 and a tap density of 2.45 g/cm³ or more.

### Experimental Example 4: Evaluation of Charging Capacity and Lifetime Characteristics

Lithium secondary batteries were manufactured using the positive electrode active materials prepared in Examples and Comparative Examples, and the charging capacity and lifetime characteristics of each of the lithium secondary batteries were evaluated.

Specifically, each of the positive electrode active materials prepared in Examples 1 to 2 and Comparative Example 1 to 3, FX35 as a conductive agent, KF9709 as a binder, and BM740H as a binder were mixed in an NMP solvent at a weight ratio of 95:2:3:0.15 to prepare a positive electrode slurry. The positive electrode slurry was applied on one surface of an aluminum current collector, dried at 130 °C, and then rolled such that a porosity of a positive electrode active material layer became 20 vol%, thereby preparing a positive electrode. Meanwhile, a Li metal disk was used as a negative electrode active material. After an electrode assembly was prepared by interposing a separator between the positive electrode and negative electrode prepared as described above, the electrode assembly was disposed in a battery case and then an electrolyte solution was injected into the case to prepare a lithium secondary battery. In this case, as the electrolyte solution, an electrolyte solution, in which 1 M LiPF6 was dissolved in an organic solvent of EC/EMC/DMC (3/3/4, vol%), was injected to prepare the lithium secondary battery.

The lithium secondary battery prepared as described above was charged to 4.25 V at a constant current of 0.1 C at 25 °C in the CC/CV mode (end current of 0.05 C), and then the charge capacity was measured while performing CC mode discharge until the voltage reached 3.0 V, and the results are shown in Table 3 below. In this case, 1 C was set as 200 mA/g.

In addition, the lithium secondary battery prepared as described above was charged to 4.25 V at a constant current of 0.5 C at 45 °C in the CC/CV mode (end current 0.05C), and then CC mode discharge was performed until the voltage reached 2.5 V, which was set as one cycle. 50 cycles were repeated, and the discharge capacity percentage of the 50th cycle with respect to the discharge capacity of the first cycle was determined as a capacity retention, and the results are shown in Table 3 below.

**[Table 3]**

| Division | Charge capacity (mAh/g) | Capacity retention (%) |
|---|---|---|
| Example 1 | 243.9 | 96.49 |
| Example 2 | 231.1 | 96.79 |
| Comparative Example 1 | 237.6 | 95.65 |
| Comparative Example 2 | 227.4 | 95.98 |
| Comparative Example 3 | 238.2 | 95.13 |

Referring to Tables 1 to 3 and FIGS. 2 to 6, it may be confirmed that by adjusting the firing temperature and the particle size distribution, the positive electrode active materials prepared in Examples 1 to 2 are in the form of a single particle, and when a triangle is drawn by connecting the peak point having the maximum y value and the full width at half maximum (FWHM) in the particle size distribution curve of a log scale in which the x-axis is a particle diameter (unit: µm) of the lithium composite transition metal oxide and the y-axis is a volume percentage (unit: %), the right inner angle of the triangle is larger than the left inner angle thereof, and the y value of the peak point is 10 to 15. In addition, it may be confirmed that the positive electrode active materials prepared in Examples 1 to 2 have a rolling density of 3.57 g/cm³ or more according to Equation 2 above and a tap density of 2.45 g/cm³ or more. From these results, it may be confirmed that when the positive electrode is prepared using the positive electrode active material according to the present invention, the porosity of the positive electrode active material layer is reduced, and thus the contact area between the positive electrode active material and the conductive agent is increased, thereby increasing the charging capacity of the lithium secondary battery and improving lifetime characteristics. Specifically, it may be confirmed that the battery including the positive electrode active material of Example 1 has more improved charging capacity than the batteries including the positive electrode active materials of Comparative Examples 1 and 3 having the same composition, and the battery including the positive electrode active material of Example 2 has more improved charging capacity than the battery including the positive electrode active material of Comparative Example 2 having the same composition. In addition, it may be confirmed that the batteries including the positive electrode active materials of Examples 1 and 2 have significantly improved capacity retention compared to the batteries including the positive electrode active materials of Comparative Examples 1 to 3.

## Claims

1. A positive electrode active material comprising a lithium composite transition metal oxide which is in the form of a single particle and comprises two or more selected from nickel, cobalt, and manganese,
Wherein when a triangle is drawn by connecting a peak point having a maximum y value and a full width at half maximum (FWHM) in a particle size distribution curve of a log scale in which an x-axis is a particle diameter (unit: µm) of the lithium composite transition metal oxide and a y-axis is a volume percentage (unit: %), a right inner angle of the triangle is larger than a left inner angle thereof, and the y value of the peak point is 10 to 15.

2. The positive electrode active material of claim 1, wherein the lithium composite transition metal oxide is a single particle or a secondary particle in which at most 10 primary particles are aggregated.

3. The positive electrode active material of claim 1, wherein the lithium composite transition metal oxide contains 60 mol% or more of nickel among all metals other than lithium.

4. The positive electrode active material of claim 1, wherein the lithium composite transition metal oxide has a composition represented by Formula 1 below:
[Formula 1] LiₓNiₐCo_{b}Mn_{c}M¹_{d}O₂
wherein, in Formula 1 above,
M¹ is at least one selected from among Al, Zr, B, W, Mo, Cr, Nb, Mg, Hf, Ta, La, Ti, Sr, Ba, Ce, P, Y, Na, and Ca, and
0.9≤x≤1.3, 0.6≤a<1.0, 0<b<0.4, 0<c<0.4, 0≤d≤0.2, and a+b+c+d=1.

5. The positive electrode active material of claim 1, wherein the lithium composite transition metal oxide has a D₅₀ of 3 µm to 10 µm.

6. The positive electrode active material of claim 1, wherein the lithium composite transition metal oxide has a Dₘᵢₙ of 0.5 µm to 4 µm.

7. The positive electrode active material of claim 1, wherein the lithium composite transition metal oxide has a Dₘₐₓ of 11 µm to 31 µm.

8. The positive electrode active material of claim 1, wherein the positive electrode active material has a rolling density of at least 3.57 g/cm³.

9. The positive electrode active material of claim 1, wherein the positive electrode active material has a tap density of 2.45 g/cm³ to 2.80 g/cm³.

10. A positive electrode comprising:
a positive electrode current collector; and
a positive electrode active material layer which is formed on the positive electrode current collector and comprises the positive electrode active material according to claim 1.

11. A lithium secondary battery comprising:
the positive electrode according to claim 10;
a negative electrode;
a separator disposed between the positive electrode and the negative electrode; and
an electrolyte.
